# EUROPEAN PATENT SPECIFICATION

(11) **EP 4 159 999 B1**
(45) Date of publication and mention of the grant of the patent: **12.02.2025**
(21) Application number: 22198801.7
(22) Date of filing: 29.09.2022
(51) Int. Cl.: F02K 9/12, F02K 9/20, F02K 9/22

(54) **ROCKET SOLID PROPELLANT GRAIN**
FESTSTOFFTREIBMITTELKORN EINER RAKETE
GRAIN PROPULSEUR SOLIDE DE FUSÉE

(30) Priority: 29.09.2021 PL 43906621
(43) Date of publication of application: 05.04.2023
(73) Proprietor: SIEC BADAWCZA LUKASIEWICZ-INSTYTUT LOTNICTWA, 02-256 Warszawa (PL)
(72) Inventor: Pela, Grzegorz, 01-235 Warszawa (PL)
(74) Representative: LDS Lazewski Depo & Partners

(56) References cited:
- DE-B- 1 227 285
- GB-A- 1 222 643
- GB-A- 944 355
- US-A- 2 763 127

## Description

The subject of the invention is a grain of a solid rocket propellant material.

The most commonly used type of a solid propellant grain for rocket motors so far is a cylindrical grain with an inhibited outer surface and a core channel along its entire length with a constant or variable cross-section (e.g. circular or star-type). This grain is characterized by a relatively high thrust and a short burning time.

From US6530327B2, various solid fuel configurations are known with a core channel along the entire length of a cylindrical grain, including star, moon and C-shaped core cross-sections.

Another common solution is a grain without a core channel with an outer surface and one of the frontal surfaces being inhibited. It is characterized by low thrust and long burning time.

However, the solutions mentioned share relatively large differences in thrust and operating time for a given propellant material. In order to obtain intermediate values of thrust and operating time, it is often necessary to use a different propellant material or to change dimensions of a combustion chamber in a significant way, most often within its internal diameter.

Polish patent PL235841B1 describes a propellant grain for a rocket motor with an extended operating time, having at least one internal compartment having thermal insulation properties built into an axially symmetrical grain, extending the burning path of the solid propellant material relative to the rocket motor nozzle, wherein the compartment being at least one plate with a diameter smaller than the grain diameter, located coaxially along the grain axis.

GB944355A discloses a solid propellant rocket motor having a combustion chamber and a propellant charge located therein, said charge having a slower burning front part which is enclosed in an insulating layer wedged or secured to the inner wall of the combustion chamber, whilst space is provided between the remaining part of said charge and the wall of the chamber, the said front part of the propellant charge and the insulating layer and corresponding portion of the wall of the combustion chamber being tapered inwardly in a forward direction.

US2763127A discloses a grain being a solid cylinder of propellant material with an axial perforation therethrough to receive a trap rod, provided with a washer and nut at the lower end of the grain. Said grain is provided with transverse slot therein over one portion of its length. These transverse slots or grooves may be cut into the cylindrical grain from its outer surface towards its axis, the slots being close enough together to provide a number of thin annular webs of propellent material therebetween, for the purpose of causing a rapid initial pressure increase during burning.

The object of the invention is to enable intermediate thrust and operating time values to be obtained without having to alter the propellant material or the design of the combustion chamber significantly.

According to the invention, a solid rocket propellant grain comprising frontal surfaces and a lateral surface comprises a first type layer which is completely filled in cross-section with a solid propellant material with an inhibited lateral surface, and a second type layer which has at least one recess in a solid propellant material with a non-inhibited lateral surface, wherein the solid propellant material is a homogenous solid propellant material, wherein the first and second type layers are cylindrical in shape, and wherein for at least one cylinder of the second type layer, both bottom and upper bases adhere to a base of a first type layer cylinder.

In a preferred embodiment, the recess is a groove.

In another preferred embodiment, the recess is a circular hole.

In yet another preferred embodiment, the recess is a polygonal, in particular rectangular, hole.

Preferably, the second type layer has a plurality of recesses in the solid propellant material with a non-inhibited lateral surface. In a preferred embodiment, the plurality of recesses are distributed radially around the longitudinal axis of the grain. In another preferred embodiment, the plurality of recesses each have the same depth. In yet another preferred embodiment, the at least one recess of the plurality of recesses has a different depth to the others.

Preferably, one of the frontal surfaces of the solid rocket propellant grain according to the invention is inhibited.

The solution according to the invention extends the possibilities of designing and selecting thrust curves by obtaining a wide range of propellant burning areas during rocket motor operation in situations where end-burning grains, or those with a core channel and their variations, do not allow satisfactory thrust profiles to be obtained.

The present invention is illustrated by the embodiments shown in the drawings in which
- Fig. 1: shows an embodiment of the grain in a perspective view in longitudinal section,
- Fig. 2: shows the grain of Fig. 1 before application of the inhibitor,
- Fig. 3: shows the grain with round holes before application of the inhibitor,
- Fig. 4: shows the grain with polygonal holes before application of the inhibitor,
- Fig. 5: shows the comparative grain known from the prior art,
- Fig. 6: shows the thrust curve of the comparative grain of Fig. 5,
- Fig. 7: shows the thrust curve of the grain according to the embodiment shown in Fig. 1.

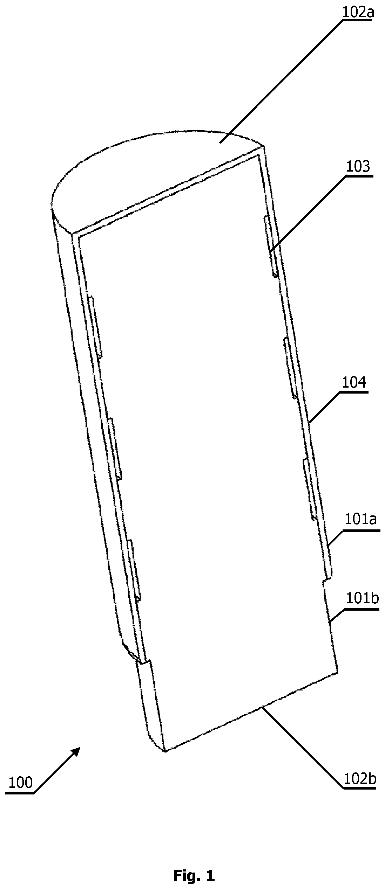

Fig. 1 shows an embodiment of a solid rocket propellant grain 100 in a form of a cylinder comprising frontal surfaces 102a, 102b and lateral surfaces 101a, 101b, wherein the frontal surface 102a is covered by a tape inhibitor 104, and the frontal surface 102b is non-inhibited. The grain 100 in the embodiment is a homogeneous block of propellant material, fragments of which (referred to herein as layers) have been modified by excavation to give two types of layers of which a first type layer is completely filled in cross-section with a solid propellant material with an inhibited lateral surface 101a and a second type layer has a circumferential recess 103 in a solid propellant material with a non-inhibited lateral surface 101b, wherein each of the three second type layers having the recess 103 is surrounded by the first type layer on both sides. Since in the embodiment the first and second type layers are cylindrical in shape, the grain 100 thus comprises two types of cylinders connected by bases and constituting in this embodiment a homogeneous block of propellant material, wherein for at least one cylinder of the second type layer, both bottom and upper bases adhere to the base of the first type layer cylinder. The grain 100 does not have a core channel. Alternatively, the core channel may be present only up to a certain depth. The grain 100 according to the embodiment burns frontally and radially. During operation, as the grain shortens, successive burning areas of the recesses 103 made earlier are exposed, thereby increasing the burning area and thus the thrust produced. This allows for a relatively high average thrust over a relatively long operating time.

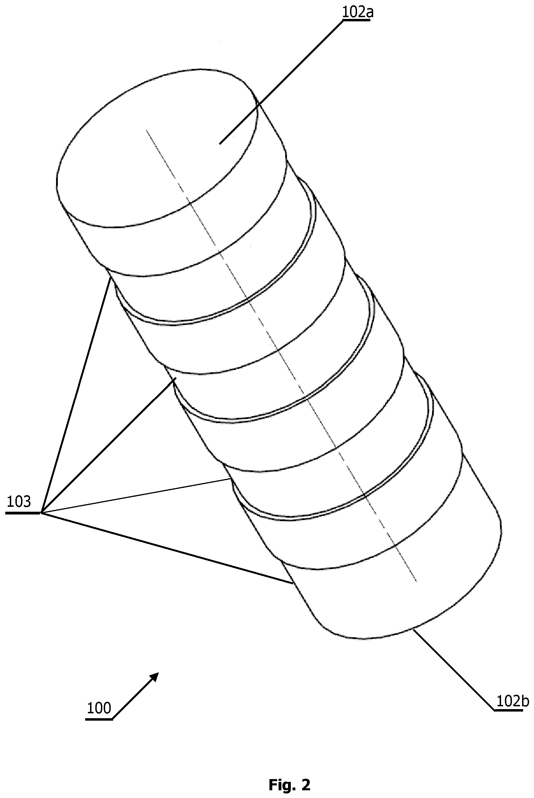

Fig. 2 shows the grain of Fig. 1 prior to application of a tape inhibitor (e.g., made of ethyl cellulose), showing circumferential recesses 103 made in a whole grain of homogeneous material (e.g., nitrocellulose and nitro-glycerine based) after removal treatment (e.g., by cutting) to obtain the appropriate external geometry.

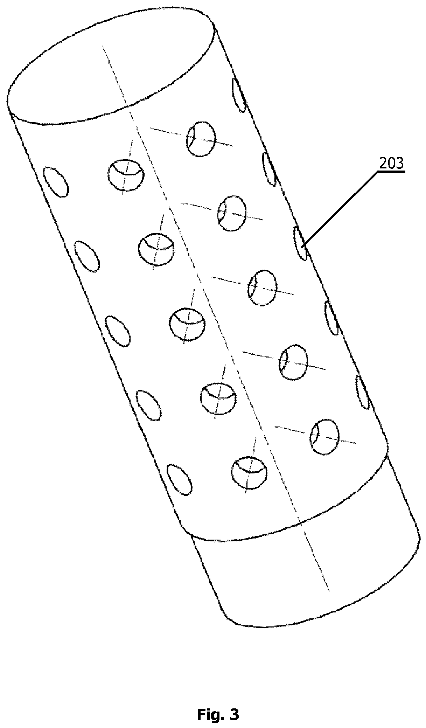

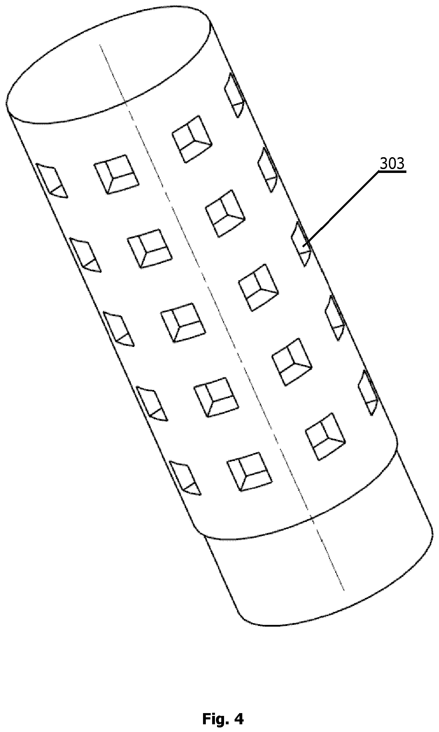

Exemplary grain geometries after modification, but prior to inhibitor application, are shown in Figs. 3 and 4, wherein the recesses 103 shown in Fig. 3 have a shape of circular holes and the recesses 103 shown in Fig. 4 have a shape of polygonal holes.

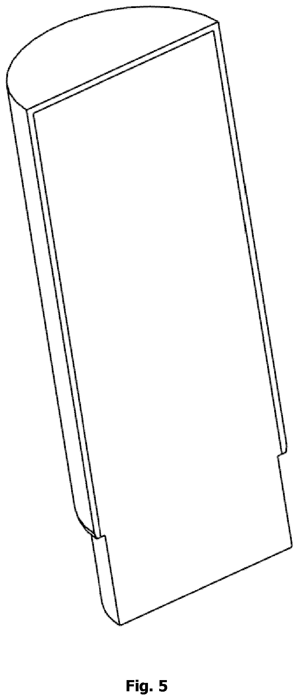

In order to compare the properties of the grain according to the invention, an exemplary comparative grain was made as illustrated in the longitudinal section view in Fig. 5. The comparative grain was made analogously to that of the embodiment in Fig. 1, with the difference that the comparative grain did not contain recesses on the lateral surface coated with an inhibitor.

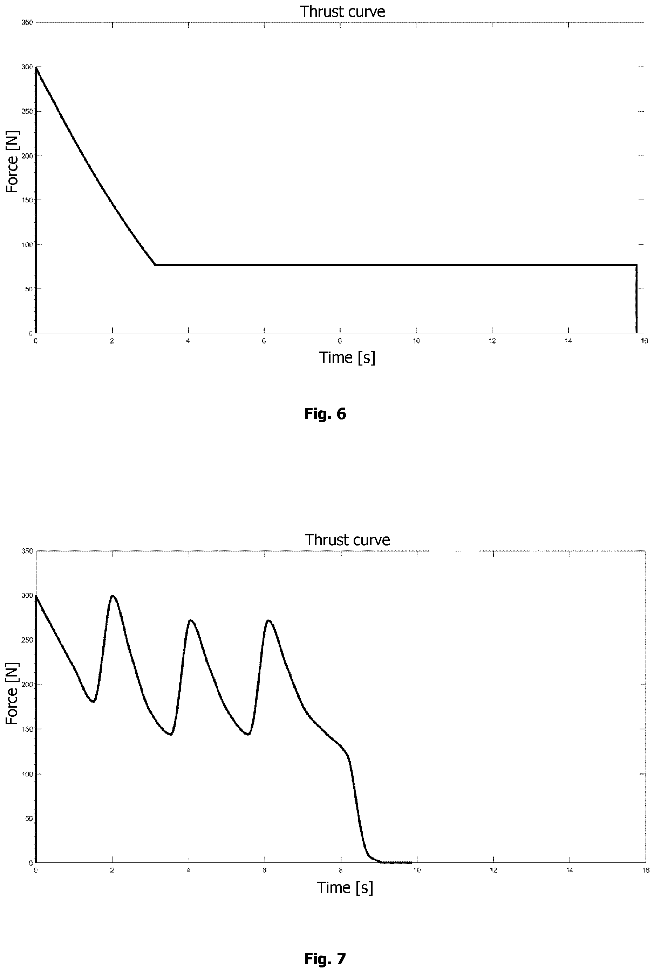

Fig. 6 shows a thrust curve obtained for the comparative grain, and Fig. 7 shows a thrust curve obtained for the embodiment illustrated in Fig. 1. Both thrust curves were approximated for the same homogeneous propellant material and the same dimensions of the combustion chamber assuming an ideal exhaust gas expansion to ambient pressure, adiabatic flow, no losses.

The comparative grain, being an end-burning grain with the inhibitor removed on a fragment of its length, generates a curve of the type: boost and sustain. In turn, the grain according to the embodiment illustrated in Fig. 1 allowed to increase the average thrust value and shorten the operating time which is still much longer than the boost phase of the comparative thrust curve. It should be noted at this point that an appropriate choice of the number and height of the grooves would result in less thrust fluctuations for the grain according to the invention. The selection of the shape and arrangement of the recesses in the grain according to the invention makes it possible to obtain a low-pulsation thrust with a relatively high value and a long operating time. It should also be noted that, in the comparative example discussed, the grain with a core channel along its entire length would not allow an operating time of more than 3 seconds, referred to in this example as a time of a boost phase.

The grain according to the invention allows to delay an activation of additional burning areas, so that the motor is able to operate for a relatively long time compared to a grain with a core channel along its entire length, and with a relatively high thrust compared to an end-burning grain. Thus, the invention allows to increase the average thrust in a sustain phase of the thrust curve, while shortening its duration, or to lower the average thrust in the boost phase of the thrust curve, with a simultaneous extension of its duration - these changes can be implemented with a relatively large freedom. The constructor gets a wide range of possibilities for modelling a thrust curve of a solid rocket motor in a significant way which is largely independent of the propellant material and motor design. The invention provides a grain having an intermediate form between the end-burning grain (so-called cigarette) and a grain with a core channel along its entire length.

The advantage of the invention is that it is possible to obtain thrust curves with a relatively long burning time and a relatively high average thrust without the need to change a chemical composition of a propellant material or far-reaching changes to a motor design. As a result, it is possible to more quickly adapt a motor containing the grain according to the invention to a new thrust curve and to new mission requirements. The invention also makes it possible to create a series of motors with very different thrust curves compatible with a given rocket design at a low cost, and also gives the opportunity to increase the flight altitude or range of the rocket.

The disclosed embodiments of the invention are intended to be illustrative only and not limiting the scope of protection of the invention as defined by the claims.

## Claims

1. A solid rocket propellant grain comprising frontal surfaces and a lateral surface, comprising:
a first type layer which is completely filled in cross-section with a solid propellant material with an inhibited lateral surface (101a), and
a second type layer which has at least one recess (103) in a solid propellant material with a non-inhibited lateral surface (101b),
wherein the solid propellant material is a homogenous solid propellant material,
wherein the first and second type layers are cylindrical in shape, and
wherein for at least one cylinder of the second type layer, both bottom and upper bases adhere to a base of a first type layer cylinder.

2. The solid rocket propellant grain according to claim 1, wherein the recess (103) is a groove.

3. The solid rocket propellant grain according to claim 1, wherein the recess (103) is a circular hole (203).

4. The solid rocket propellant grain according to claim 1, wherein the recess (103) is a polygonal hole (303).

5. The solid rocket propellant grain according to claim 1, wherein the recess (103) is a rectangular hole.

6. The solid rocket propellant grain according to one of claims 1 - 5, wherein the second type layer has a plurality of recesses (103) in the solid propellant material with a non-inhibited lateral surface (101b).

7. The solid rocket propellant grain according to claim 6, wherein the plurality of recesses (103) are distributed radially around the longitudinal axis of the grain (100).

8. The solid rocket propellant grain according to claim 6, wherein the plurality of recesses (103) each have the same depth.

9. The solid rocket propellant grain according to claim 6, wherein the at least one recess (103) of the plurality of recesses (103) has a different depth to the others.

10. The solid rocket propellant grain according to one of claims 1 - 9, wherein one of the frontal surfaces (102a, 102b) is inhibited.

## Patentansprüche

1. Feststoffraketentreibstoffkorn mit Stirnflächen und einer Seitenfläche, umfassend:
eine erste Typschicht, die im Querschnitt vollständig mit einem Feststofftreibstoff mit einer gehemmten Seitenfläche (101a) gefüllt ist, und
eine zweite Typschicht, die mindestens eine Aussparung (103) in einem Feststofftreibstoff mit einer nicht gehemmten Seitenfläche (101b) aufweist,
wobei der Feststofftreibstoff ein homogener Feststofftreibstoff ist,
wobei die erste und zweite Typschichten zylindrisch geformt sind, und
wobei bei mindestens einem Zylinder der zweiten Typschicht sowohl die untere als auch die obere Basis an einer Basis eines Zylinders der ersten Typschicht haften.

2. Feststoffraketentreibstoffkorn nach Anspruch 1, wobei die Aussparung (103) eine Rille ist.

3. Feststoffraketentreibstoffkorn nach Anspruch 1, wobei die Aussparung (103) ein kreisförmiges Loch (203) ist.

4. Feststoffraketentreibstoffkorn nach Anspruch 1, wobei die Aussparung (103) ein polygonales Loch (303) ist.

5. Feststoffraketentreibstoffkorn nach Anspruch 1, wobei die Aussparung (103) ein rechteckiges Loch ist.

6. Feststoffraketentreibstoffkorn nach einem der Ansprüche 1 - 5, wobei die zweite Typschicht eine Vielzahl von Aussparungen (103) im Feststofftreibstoffmaterial mit einer nicht gehemmten Seitenfläche (101b) aufweist.

7. Feststoffraketentreibstoffkorn nach Anspruch 6, wobei die Mehrzahl von Aussparungen (103) radial um die Längsachse des Korns verteilt sind (100).

8. Feststoffraketentreibstoffkorn nach Anspruch 6, wobei die Mehrzahl von Aussparungen (103) jeweils die gleiche Tiefe aufweisen.

9. Feststoffraketentreibstoffkorn nach Anspruch 6, wobei die mindestens eine Aussparung (103) der Mehrzahl von Aussparungen (103) im Verhältnis zu den anderen eine andere Tiefe aufweist.

10. Feststoffraketentreibstoffkorn nach einem der Ansprüche 1 - 9, wobei eine der Stirnflächen (102a, 102b) gehemmt ist.

## Revendications

1. Grain propulseur solide pour fusée comprenant des surfaces frontales et une surface latérale, comprenant :
une couche de premier type qui est entièrement remplie en section transversale avec un matériau propulseur solide avec une surface latérale inhibée (101a), et
une couche de deuxième type qui présente au moins un évidement (103) dans un matériau propulseur solide avec une surface latérale non inhibée (101b),
le matériau propulseur solide étant un matériau propulseur solide homogène,
les couches de premier et de deuxième type étant de forme cylindrique, et
pour au moins un cylindre de la couche de deuxième type, les bases inférieure et supérieure adhérant à une base d'un cylindre de la couche de premier type.

2. Grain propulseur solide pour fusée selon la revendication 1, dans lequel l'évidement (103) est une rainure.

3. Grain propulseur solide pour fusée selon la revendication 1, dans lequel l'évidement (103) est un trou circulaire (203).

4. Grain propulseur solide pour fusée selon la revendication 1, dans lequel l'évidement (103) est un trou polygonal (303).

5. Grain propulseur solide pour fusée selon la revendication 1, dans lequel l'évidement (103) est un trou rectangulaire.

6. Grain propulseur solide pour fusée selon l'une des revendications 1 à 5, dans lequel la couche de deuxième type présente une pluralité d'évidements (103) dans le matériau propulseur solide avec une surface latérale non inhibée (101b).

7. Grain propulseur solide pour fusée selon la revendication 6, dans lequel la pluralité d'évidements (103) sont répartis radialement autour de l'axe longitudinal du grain (100).

8. Grain propulseur solide pour fusée selon la revendication 6, dans lequel la pluralité d'évidements (103) ont chacun la même profondeur.

9. Grain propulseur solide pour fusée selon la revendication 6, dans lequel l'au moins un évidement (103) parmi la pluralité d'évidements (103) a une profondeur différente par rapport aux autres.

10. Grain propulseur solide pour fusée selon l'une des revendications 1 à 9, dans lequel l'une des surfaces frontales (102a, 102b) est inhibée.
